# FASCICULE DE BREVET EUROPEEN

(11) **EP 2 297 954 B1**
(45) Date de publication et mention de la délivrance du brevet: **08.11.2017**
(21) Numéro de dépôt: 09772704.4
(22) Date de dépôt: 05.06.2009
(51) Int. Cl.: H04N 7/167

(54) **MISE A JOUR DE DROITS D'ACCES A UN CONTENU AUDIOVISUEL PROTEGE**
AKTUALISIERUNG VON BERECHTIGUNGEN FÜR DEN ZUGANG ZU GESCHÜTZTEN AUDIOVISUELLEN INHALTEN
UPDATING OF ENTITLEMENTS TO ACCESS A PROTECTED AUDIOVISUAL CONTENT

(30) Priorité: 09.06.2008 FR 0853817
(43) Date de publication de la demande: 23.03.2011
(73) Titulaire: Orange, 75015 Paris (FR)
(72) Inventeur: GUIONNET, Chantal, F-35510 Cesson Sevigne (FR); NOURRY, Pascal, F-35000 Rennes (FR)
(74) Mandataire: Cabinet Plasseraud
(86) Numéro de dépôt international: PCT/FR2009/051067
(87) Numéro de publication internationale: WO 2010/001022

(56) Documents cités:
- EP-A- 1 353 511
- US-A1- 2005 249 350
- COUTROT F ET AL: "A SINGLE CONDITIONAL ACCESS SYSTEM FOR SATELLITE-CABLE AND TERRESTRIAL TV" IEEE TRANSACTIONS ON CONSUMER ELECTRONICS, IEEE SERVICE CENTER, NEW YORK, NY, US, vol. 35, no. 3, 1 août 1989 (1989-08-01), pages 464-468, XP000065971 ISSN: 0098-3063
- ANGEBAUD D ET AL: "CONDITIONAL ACCESS MECHANISMS FOR ALL-DIGITAL BROADCAST SIGNALS" IEEE TRANSACTIONS ON CONSUMER ELECTRONICS, IEEE SERVICE CENTER, NEW YORK, NY, US, vol. 38, no. 3, 1 août 1992 (1992-08-01), pages 188-194, XP000311835 ISSN: 0098-3063

## Description

L'invention se rapporte au domaine de la mise à jour ou actualisation de droits d'accès à un contenu audiovisuel protégé.

Le contenu audiovisuel protégé peut par exemple être un contenu chiffré et diffusé, par exemple pour des applications de télévision à péage, ou bien encore un contenu accessible à la carte ou bien PPV (de l'anglais « Pay Per View »).

Un contrôle d'accès peut être effectué par le biais de messages de mise à jour de droits et de messages de vérification de droits.

Un message de vérification de droits, par exemple un message ECM (de l'anglais « Entitlement Control Message »), comprend typiquement au moins un critère d'accès et un moyen d'accès au contenu audiovisuel protégé, par exemple une clé de déchiffrement du contenu audiovisuel protégé. Cette clé peut comprendre par exemple un mot de contrôle ou CW (de l'anglais « Control Word »), transmis sous forme chiffrée.

Un équipement récepteur de messages de vérification de droits peut être configuré pour vérifier que les droits associés à cet équipement récepteur satisfont au critère d'accès du message de vérification de droits. Le cas échéant, le mot de contrôle CW est décrypté. Ce mot de contrôle permet de déchiffrer le contenu audiovisuel protégé.

Un message de mise à jour de droits, par exemple un message EMM (de l'anglais « Entitlement Management Message »), comprend typiquement des données d'actualisation des droits d'un équipement destinataire. Le message EMM est signé à l'aide d'une clé individuelle, ou à l'aide d'une clé de groupe, associée à l'équipement destinataire.

Lorsqu'un EMM est reçu par l'équipement destinataire, celui-ci vérifie qu'il est bien destinataire de l'EMM, en vérifiant à l'aide de sa clé individuelle, ou de groupe, la signature de l'EMM.

En cas de vérification positive, les droits associés à cet équipement destinataire sont mis à jour à partir des données d'actualisation de droit de l'EMM reçu.

Avec un tel contrôle d'accès, la mise à jour des droits d'un équipement destinataire nécessite simplement d'utiliser une clé associée à cet équipement destinataire ou à un groupe d'équipements destinataires.

Le document « A single conditional access system for satellite-cable and terrestrial TV » COUTROT et AL, IEEE transactions on consumer electronics, vol 35, n°3, 1 août 1989, pages 464-468, divulgue un système d'accès conditionnel à des contenus numériques définissant des nouveaux types de messages EMM.

Le document US2005/249350 divulgue un procédé de fourniture de nouveaux services média pour Set-Top Box, via l'utilisation d'un système de cryptage amélioré.Il existe un besoin pour une mise à jour des droits d'un équipement donné plus élaborée.

Selon un premier aspect, l'invention a pour objet un procédé pour la mise à jour de droits d'un équipement destinataire, comprenant
- une étape de réception d'un message de vérification de droits par un équipement récepteur de messages de vérification de droits, ce message comprenant
   ▪ au moins un critère d'accès à un contenu audiovisuel protégé, et
   ▪ des données chiffrées comportant un moyen d'accès à ce contenu audiovisuel protégé et au moins un message de mise à jour de droits,
- une étape de test du critère d'accès, au cours de laquelle l'équipement récepteur de messages de vérification de droits vérifie si des droits qui lui sont associés satisfont à ce critère d'accès,
- en cas de test positif du critère d'accès, une étape de déchiffrement au cours de laquelle l'équipement récepteur de messages de vérification de droits déchiffre le message de mise à jour de droits, et
- une étape de transmission du message de mise à jour de droits déchiffré en vue de la mise à jour des droits de l'équipement destinataire.

Le moyen d'accès au contenu audiovisuel protégé peut comprendre une clé de déchiffrement du contenu audiovisuel protégé, par exemple un mot de contrôle. De manière générale, l'invention n'est pas limitée par la nature de ce moyen d'accès.

Ainsi, selon un aspect de l'invention, un message de mise à jour de droits est encapsulé, sous forme chiffrée, dans un message de vérification de droits, et le traitement de ce message de vérification de droits par l'équipement récepteur conduit à déchiffrer ce message de mise à jour de droits. Ensuite, le message de mise à jour de droits est transmis afin d'être lui-même traité.

L'encapsulation d'un message de mise à jour de droits dans un message de vérification de droits permet des mises à jour des droits plus élaborées que dans l'art antérieur où un simple message de mise à jour de droits est reçu.

Avantageusement, lors d'une étape de traitement du message de mise à jour transmis effectuée par un équipement de traitement de messages de mise à jour, on vérifie, par exemple par vérification de la signature du message de mise à jour, que cet équipement de traitement est bien l'équipement destinataire. En cas de vérification positive, les droits de l'équipement destinataire sont mis à jour à partir du message de mise à jour.

L'équipement de traitement du message de mise à jour et l'équipement récepteur du message de vérification de droits peuvent être distincts ou bien confondus en un seul équipement.

Lorsque ces deux équipements sont confondus, l'étape de transmission est effectuée au sein d'un même équipement, entre différents moyens de cet équipement.

Le déchiffrement du message de mise à jour de droits est conditionné par le test du critère d'accès du message de vérification de droits. Ce critère d'accès peut être relativement restrictif ou à l'inverse peu restrictif, selon que l'on souhaite limiter fortement ou faiblement l'accès au message de mise à jour de droits. Le test de critère d'accès du message de vérification de droit peut par exemple consister à vérifier qu'un abonnement a bien été souscrit.

Le traitement des messages de vérification de droits, c'est-à-dire le test du critère d'accès de ces messages de vérification de droits, est en général lui-même soumis à des conditions relativement peu restrictives. Généralement, il suffit qu'un contenu audiovisuel embrouillé soit reçu et/ou qu'une variable donnée prenne une valeur donnée indiquant qu'un contenu audiovisuel embrouillé est à déchiffrer.

En conséquence, on peut par exemple prévoir que lorsqu'un terminal reçoit un contenu chiffré particulier, par exemple un programme publicitaire sur une chaine à péage, soient reçus des messages de vérification de droits encapsulant des messages de mise à jour de droits : les messages de vérification de droits sont traités par l'équipement récepteur, afin d'obtenir une clé de déchiffrement du programme publicitaire transmis, et les droits transmis dans le message de mise à jour de droits sont crédités par exemple à l'équipement récepteur. Les droits transmis peuvent par exemple porter sur un autre contenu que le contenu chiffré en cours de diffusion, par exemple un film. Le procédé selon un aspect de l'invention permet ainsi, lors de la consommation d'un contenu (le programme publicitaire dans l'exemple qui précède), de créditer des droits relatifs à un autre contenu (le film dans l'exemple qui précède).

Avantageusement, lors de l'étape de déchiffrement, l'équipement récepteur déchiffre l'ensemble des données chiffrées à l'aide d'une même clé de déchiffrement.

Ainsi, la vérification positive du critère d'accès déclenche de façon classique le déchiffrement des données chiffrées à l'aide d'une clé de déchiffrement. L'invention se distingue de l'art antérieur par le fait que ces données chiffrées contiennent non seulement un moyen d'accès (typiquement un mot de contrôle) à un contenu audiovisuel protégé mais également un message de mise à jour de droits. Aussi, le déchiffrement de ces données chiffrées à l'aide d'une clé de déchiffrement fournit à l'équipement récepteur non seulement le moyen d'accès au contenu protégé, mais également un message de mise à jour de droits concernant par exemple un autre contenu. Grâce à cela, le procédé peut rester compatible avec des formats et dispositifs existants de contrôle d'accès, par exemple des cartes actuelles de contrôle d'accès. Les systèmes de contrôles d'accès existants peuvent ainsi offrir un service enrichi d'accès à un contenu protégé et de mise à jour de droits, sans modification de leurs spécifications.

On peut prévoir qu'au moins un critère d'accès du message de vérification de droits reçu associe un débit au message de mise à jour de droits. Dans ce cas, l'étape de déchiffrement du message de mise à jour de droits est subordonnée à l'exécution d'une opération de débit. L'invention trouve ainsi une application dans le domaine de l'achat impulsif : le déchiffrement du message de mise à jour de droits est conditionné par une opération de débit. Celle-ci peut porter sur un nombre de "jetons" ou un nombre d'unités de temps. Le message de mise jour de droits peut par exemple concerner l'allocation de droits d'accès à un contenu audiovisuel donné destiné à être diffusé ultérieurement ou bien en cours de diffusion.

Il est connu de recevoir un ECM comprenant un critère d'accès indiquant un nombre de jetons ainsi qu'un mot de contrôle. Dans ce cas, le déchiffrement du mot de contrôle est conditionné par une opération de débit du nombre de jetons et permet d'accéder au contenu audiovisuel en cours de diffusion.

Il est également connu d'acheter des droits d'accès à un contenu donné en se connectant à un portail distant. L'envoi de droits depuis le portail distant peut prendre un certain temps. Le procédé selon un aspect de l'invention permet d'obtenir des droits d'accès de façon locale et donc immédiate.

Le contenu audiovisuel protégé peut par exemple être diffusé, par exemple pour des services de télévision à péage, ou bien encore des services de vidéos à la demande.

L'invention trouve un exemple d'application dans les systèmes de contrôle d'accès, par exemple Eurocrypt.

Le message de vérification de droits et le message de mise à jour de droits peuvent, dans un exemple particulier de réalisation, être respectivement un ECM et un EMM, en particulier dans le cadre d'un contenu audiovisuel diffusé. Les ECMs et EMMs peuvent se conformer par exemple à la norme UTE-C-90.007.

Le message de mise à jour de droits peut permettre d'enrichir les droits d'un équipement donné, ou bien encore de restreindre ces droits.

Le message de vérification de droits peut comprendre plus d'un critère d'accès, plus d'une clé de déchiffrement et/ou plus d'un message de mise à jour de droits.

Selon un autre aspect, l'invention a pour objet un système pour la mise à jour des droits d'un équipement destinataire, comprenant
- un équipement récepteur de messages de vérification de droits, comportant
   - des moyens de réception agencés pour recevoir un message de vérification de droits, ce message comprenant au moins un critère d'accès à un contenu audiovisuel protégé, et des données chiffrées comportant un moyen d'accès au contenu audiovisuel protégé et au moins un message de mise à jour de droits,
   - un composant de sécurité agencé pour tester si des droits associés à l'équipement récepteur satisfont audit critère d'accès,
   - des moyens de déchiffrement pour, en cas de test positif, accéder au message de mise à jour de droits, et
   - des moyens de transmission du message de mise à jour de droits déchiffré à des moyens de traitement de messages de mise à jour de droits, en vue d'une mise à jour des droits de l'équipement destinataire.

Avantageusement, le système comprend en outre un équipement de traitement de messages de mise à jour, comprenant les moyens de traitement, ces moyens étant agencés pour vérifier que l'équipement de traitement est bien l'équipement destinataire. L'équipement de traitement peut comporter en outre des moyens de mise à jour de droits agencés pour, en cas de vérification positive, mettre à jour les droits de l'équipement destinataire à partir du message de mise à jour.

On peut prévoir d'interdire toute mise à jour de droits en cas de vérification négative, c'est-à-dire si l'équipement de traitement n'est pas l'équipement destinataire.

Avantageusement, les moyens de traitement sont agencés pour déchiffrer l'ensemble des données chiffrées du message de vérification de droits à l'aide d'une même clé de déchiffrement.

L'invention n'est pas limitée par cette réalisation. Par exemple, les clés de déchiffrement pour accéder respectivement à un mot de contrôle et à un EMM par exemple peuvent être distinctes.

Selon un autre aspect, l'invention a pour objet un programme d'ordinateur comportant des instructions pour la mise en oeuvre des étapes du procédé selon un aspect de l'invention, lorsque ces instructions sont exécutées par un processeur.

Si l'équipement récepteur et l'équipement de traitement sont confondus, le programme peut comporter en outre des instructions pour la mise en oeuvre des étapes réalisées par l'équipement de traitement.

Selon encore un autre aspect, l'invention a pour objet un message comprenant un message de vérification de droits comportant au moins un critère d'accès à un contenu audiovisuel protégé, et des données chiffrées comportant un moyen d'accès au dit contenu audiovisuel protégé et au moins un message de mise à jour de droits.

Le moyen d'accès à un contenu audiovisuel peut comprendre par exemple une clé de déchiffrement de contenu audiovisuel protégé, par exemple un mot de contrôle. Le message de vérification de droits est donc destiné à fournir d'une part une clé pour déchiffrer un contenu, et d'autre part un message pour mettre à jour des droits d'un équipement destinataire.

Le message de vérification de droits peut comporter plusieurs messages de mise à jour de droits, chacun de ces messages étant par exemple destiné à un équipement destinataire respectif.

Le message de vérification de droits peut être lui-même encapsulé dans un autre message de vérification de droits, afin de permettre plusieurs vérifications successives avant d'accéder au message de mise à jour de droits. Le contenu de la demande déposée le 27 mai 2008 sous le numéro FR0853451 décrit une telle encapsulation

L'invention n'est donc en rien limitée par les configurations possibles du message de mise à jour de droits d'accès à un contenu audiovisuel protégé.

Selon un autre aspect, l'invention a pour objet un procédé de gestion de droits d'un équipement destinataire, comprenant les étapes consistant à recevoir au moins un message de mise à jour de droits, et générer un message de vérification de droits comprenant
- au moins un critère d'accès à un contenu audiovisuel protégé, et
- des données chiffrées comportant un moyen d'accès au dit contenu audiovisuel protégé et ce message de mise à jour de droits.

Le message de mise à jour de droits et le message de vérification de droits sont générés par des premiers moyens de traitement et des deuxièmes moyens de traitement respectivement. Ces premiers et deuxièmes moyens de traitement peuvent être confondus ou distincts, faire partie d'un même équipement ou bien encore faire partie de deux équipements respectifs distincts. Ces deux équipements distincts peuvent éventuellement être distants l'un de l'autre, et/ou appartenir à deux opérateurs différents.

Selon encore un autre aspect, l'invention a pour objet un programme d'ordinateur comportant des instructions pour la mise en oeuvre du procédé ci-dessus, lorsque ces instructions sont exécutées par un processeur.

Selon encore un autre aspect, l'invention a pour objet un système de gestion de droits d'un équipement destinataire, comprenant des moyens de réception aptes à recevoir un message de mise à jour de droits et des moyens de traitement aptes à générer un message de vérification de droits comprenant au moins un critère d'accès à un contenu audiovisuel protégé, et des données chiffrées comportant un moyen d'accès à ce contenu audiovisuel protégé et au moins un message de mise à jour de droits.

Le système peut en outre comprendre des moyens de génération du message de mise à jour de droits, ces moyens étant reliés aux moyens de réception. Les moyens de génération peuvent éventuellement être distants des moyens de réception.

D'autres particularités et avantages de la présente invention apparaîtront dans la description détaillée ci-après, faite en référence aux dessins annexés sur lesquels :
- La figure 1 montre un exemple de message de mise à jour de droits d'accès, selon un mode de réalisation de l'invention,
- La figure 2 montre un exemple de système de gestion de droits d'accès, selon un mode de réalisation de l'invention,
- La figure 3 est un organigramme d'un exemple de procédé exécutable par le système de la figure 2,
- La figure 4 montre un exemple de système de mise à jour de droits, selon un mode de réalisation de l'invention.
- La figure 5 est un organigramme d'un exemple de procédé de mise à jour de droits d'accès, exécutable par le système de la figure 4.
- La figure 6 est un organigramme d'un exemple de procédé de mise à jour de droits d'accès, selon un autre mode de réalisation de l'invention.

Des références identiques désignent des objets identiques ou similaires d'une figure à l'autre.

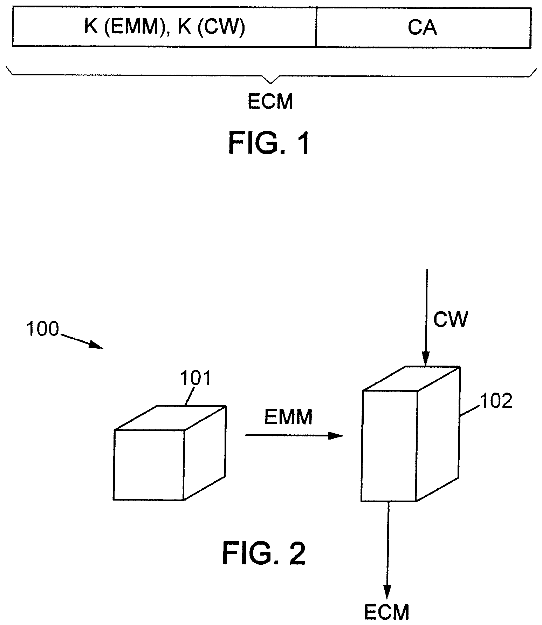

On se réfère tout d'abord à la figure 1, sur laquelle on a représenté un exemple de message selon un mode de réalisation particulier de l'invention. Ce message comprend un message de vérification de droits ECM, ici un ECM. Le message ECM comprend ici un critère d'accès représenté sous la référence CA, et des données chiffrées comprenant un mot de contrôle CW et un message de mise à jour de droits EMM, ici un EMM. Plusieurs critères d'accès pourraient être présents dans le message ECM.

Dans l'exemple particulier décrit ici, les données chiffrées du message ECM, à savoir le mot de contrôle CW chiffré, noté K(CW), et le message EMM chiffré, noté K(EMM), ont été chiffrées à l'aide d'une même clé K et d'un même algorithme de chiffrement.

Le critère d'accès CA définit une condition d'accès à une clé de déchiffrement K⁻¹ du mot de contrôle CW et du message EMM, par exemple avoir souscrit à un abonnement, avoir plus de 18 ans, ou autre.

Le message EMM comporte des données d'actualisation de droits non représentées sur la figure 1, par exemple des données correspondant à une autorisation de visualisation d'un contenu correspondant à un documentaire.

Cette structure de message impose un traitement de l'ECM pour déchiffrer les données chiffrées, à savoir le mot de contrôle chiffré K(CW) et le message de mise à jour de droits chiffré K(EMM). Ainsi, le mot de contrôle CW et l'EMM ne sont déchiffrés que si le critère d'accès est vérifié.

L'intégrité des données contenues dans l'ECM est garantie par une signature qui est élaborée à partir d'une clé détenue par chaque équipement récepteur apte à traiter cet ECM. De même, l'intégrité des données contenues dans l'EMM est garantie par une signature qui est élaborée à partir d'une clé détenue par le ou les équipement(s) destinataire(s) des droits de l'EMM.

La figure 2 montre un exemple de système de gestion de droits d'accès. Ce système 100 est composé de plusieurs dispositifs 101, 102, éventuellement distants les uns des autres.

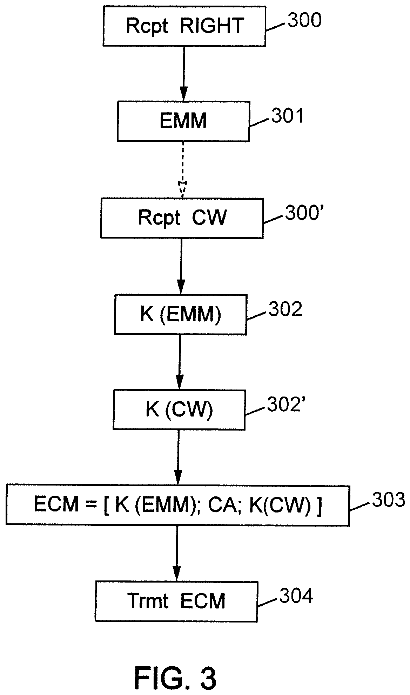

La figure 3 illustrant un procédé exécutable par le système de la figure 2, ces deux figures seront commentées simultanément.

Le dispositif 101 reçoit des données d'actualisation de droits RIGHT lors d'une étape 300 sur la figure 3. Ces données peuvent par exemple être du même type que les données d'actualisation de droits des EMMs de l'art antérieur.

Le dispositif 101 comporte des moyens de génération d'EMM (non représentés) pour générer un EMM à partir des données d'actualisation de droits RIGHT, lors d'une étape 301. L'EMM généré contient les données d'actualisation de droits et une signature.

L'EMM est transmis au dispositif 102.

Par ailleurs, le dispositif 102 reçoit un mot de contrôle CW d'accès à un contenu audiovisuel chiffré lors d'une étape 300'.

Le dispositif 102 inclut des moyens de chiffrement non représentés utilisant une clé de chiffrement K et un algorithme de chiffrement donné. Le dispositif 102 chiffre l'EMM lors d'une étape 302 et chiffre également le mot de contrôle CW lors d'une étape 302'.

On notera que, dans l'exemple décrit ici, le mot de contrôle CW et l'EMM sont chiffrés à l'aide d'une même clé K et d'un même algorithme de chiffrement.

Le dispositif 102 comporte des moyens de traitement pour générer un ECM comportant au moins un critère d'accès, les données chiffrées comportant l'EMM et le mot de contrôle CW et une signature, lors d'une étape 303.

Puis l'ECM ainsi généré est diffusé lors d'une étape 304, par exemple à un parc d'équipements de réception, à certains équipements de réception seulement, ou à un seul équipement de réception.

Les procédés mis en oeuvre par les dispositifs 101, 102 et conduisant à générer des EMMs ou des ECMs respectivement, sont bien connus de l'homme du métier et ne seront pas détaillés davantage.

Le système 100 peut comprendre en outre un dispositif de chiffrement (non représenté) d'un contenu audiovisuel, en utilisant par exemple une clé de chiffrement correspondant au mot de contrôle CW. Le dispositif de chiffrement est en soi connu de l'homme du métier et ne sera pas décrit davantage. Le dispositif de chiffrement peut être distinct du ou des autres équipement(s) du système 100.

Le dispositif 102 peut générer, outre des ECMs encapsulant des EMMs, des ECMs classiques transportant les mots de contrôle successifs.

Selon un mode de réalisation alternatif et non représenté, l'EMM et l'ECM encapsulant cet EMM sont générés par un seul et même équipement. Dans ce cas, l'étape de transmission de l'EMM à encapsuler dans un ECM peut être effectuée entre deux processeurs ou encore entre deux mémoires internes d'un même processeur.

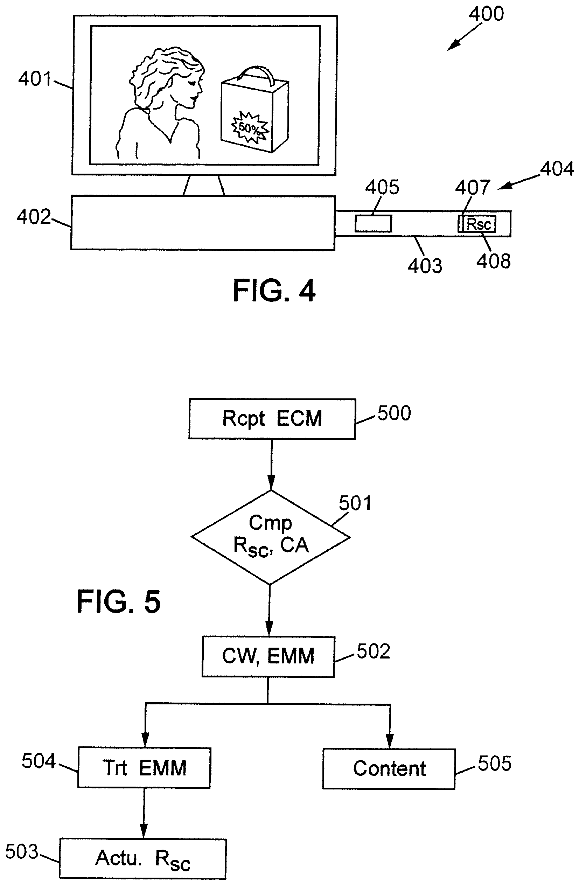

La figure 4 et la figure 5 montrent respectivement un exemple de système de mise à jour de droits et un exemple de procédé exécutable par ce système. Aussi ces figures seront-elles commentées simultanément. Sur la figure 5, on a représenté ici les étapes de réception et de traitement par le système de la figure 4 d'un message ECM contenant des données chiffrées comportant un mot de contrôle CW chiffré et un EMM chiffré. Le mot de contrôle CW est ici une clé de déchiffrement d'un contenu audiovisuel protégé, par exemple un programme publicitaire.

Le système 400 comprend un écran 401 destiné à afficher un contenu audiovisuel et un système de décodage 404 permettant d'accéder à un contenu audiovisuel protégé.

Ce système de décodage 404 comprend un décodeur 402 et un composant de sécurité, par exemple une carte à puce 403.

Le système 400 est un équipement récepteur de messages de vérification de droits comportant des moyens de réception non représentés, aptes à recevoir des ECMs, lors d'une étape 500 sur la figure 5. De tels moyens de réception sont connus de l'homme du métier et ne seront pas décrits davantage.

La carte à puce 403 est agencée pour tester sur la base de comparaisons par exemple si les droits Rsc alloués à la carte à puce satisfont à un ou plusieurs critères d'accès CA reçus dans un ECM, lors d'une étape 501. Ces droits Rsc sont stockés dans une mémoire 408.

On peut prévoir un test consistant par exemple à vérifier que la carte à puce possède des droits pour la chaîne à péage dont le contenu est affiché à l'écran 401.

Si le test est positif, des moyens de déchiffrement, par exemple un processeur 405, déchiffrent les données chiffrées contenues dans l'ECM reçu lors d'une étape 502. En particulier, le système 400 déchiffre ainsi, lors de l'étape 502, un mot de contrôle CW permettant de déchiffrer le contenu audiovisuel protégé reçu. En outre, les données chiffrées de l'ECM contenant un EMM chiffré, le système 400 déchiffre aussi l'EMM lors de l'étape 502. Ainsi, la carte à puce 403 obtient à la fois le mot de contrôle et l'EMM en clair.

Si le test est négatif, les données chiffrées de l'ECM ne sont pas déchiffrées.

Suite à l'étape de déchiffrement 502, deux étapes sont réalisées en parallèle :
- le contenu protégé, en l'espèce le programme publicitaire, est déchiffré à l'aide du mot de contrôle CW, lors d'une étape 505, afin d'être affiché sur l'écran 401 ;
- le message EMM de mise à jour de droits est transmis en vue d'un traitement.

La transmission est effectuée par des moyens de transmission non représentés. Le message EMM peut par exemple être transmis vers une mémoire non représentée de la carte à puce.

Le message EMM de mise à jour de droits contient des données d'actualisation de droits. Il est destiné à un équipement, dit "équipement destinataire (des droits)", auquel une clé individuelle est associée. L'EMM contient une signature élaborée à l'aide de la clé de cet équipement destinataire. Une étape 504 de traitement de l'EMM est ici réalisée par le système 400, plus précisément par des moyens de traitement de la carte à puce 403, par exemple un processeur 407. Elle consiste à vérifier la signature de l'EMM à l'aide d'une clé associée au système 400 afin de vérifier si le système 400 est bien l'équipement destinataire de cet EMM.

Un message EMM peut également être destiné à un groupe d'équipements destinataires, associé à une signature de groupe. Dans ce cas, l'EMM est signé à l'aide de cette clé de groupe et chaque équipement du groupe dispose de cette clé de groupe pour vérifier la signature de l'EMM reçu.

Si le traitement de l'EMM est correct, c'est-à-dire si le système 400 vérifie qu'il est bien l'équipement destinataire de l'EMM reçu, des moyens de mise à jour, par exemple le processeur 407 relié à la mémoire 408, actualisent les droits Rsc alloués à la carte à puce lors d'une étape 503.

Cette actualisation peut consister en l'octroi de droits supplémentaires, par exemple des droits d'accès à une autre chaine à péage que la chaine à péage dont le contenu est actuellement affiché.

Ce système 404 permet ainsi de créditer des droits lors de la consommation d'un contenu, en l'espèce un programme publicitaire.

Si l'utilisateur change de chaîne pendant le programme publicitaire, les ECMs encapsulant des EMMs, associés à la chaîne précédente, ne sont plus traités, de sorte que l'octroi de droits est arrêté. Il en va de même si l'utilisateur éteint ou met en veille son poste de télévision.

On notera que, dans l'exemple particulier qui vient d'être décrit, le système 400 est, à la fois équipement récepteur du message de vérification de droits (ECM) et équipement de traitement du message de mise à jour de droits (EMM).

Dans une variante de réalisation, l'équipement récepteur du message ECM et l'équipement de traitement du message EMM sont distincts. Dans ce cas, une fois que l'EMM est déchiffré, il est transmis par l'équipement récepteur de l'ECM à l'équipement de traitement d'EMM.

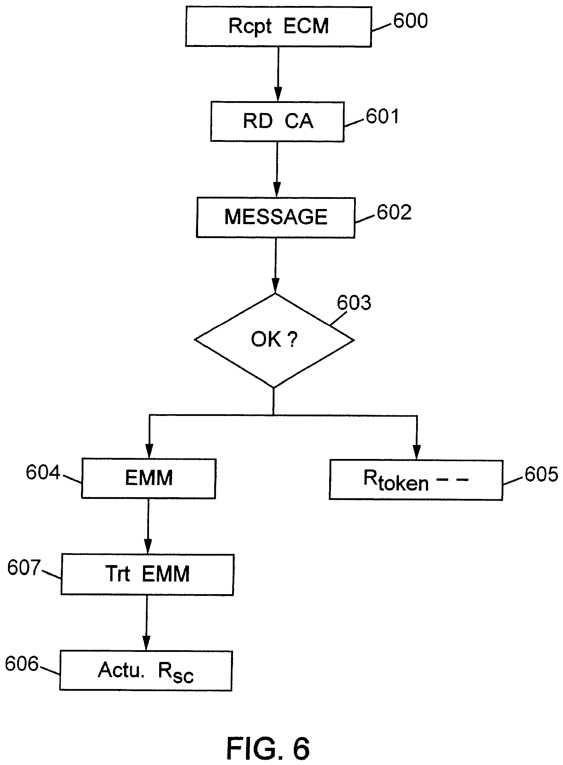

La figure 6 est un organigramme d'un autre exemple de réalisation du procédé de mise à jour de droits selon l'invention.

L'ECM reçu à l'étape 600 comporte des données chiffrées comprenant un mot de contrôle CW et un message de mise à jour de droits EMM. Cet ECM comporte en outre plusieurs critères d'accès. Par exemple, un critère d'accès non représenté est associé au mot de contrôle CW, et un autre critère d'accès CA est associé à l'EMM.

Le critère d'accès CA de l'ECM est lu lors d'une étape 601.

Si le critère d'accès correspondant au mot de contrôle CW est satisfait, l'équipement récepteur de l'ECM déchiffre ce mot de contrôle et un contenu audiovisuel en cours de diffusion est déchiffré.

Dans cet exemple, le critère d'accès CA associe un débit, ici en nombre de jetons, au déchiffrement du message de mise à jour de droits EMM.

On peut prévoir que l'ECM donne une indication du contenu audiovisuel auquel l'EMM peut donner droit.

Un message est affiché lors d'une étape 602, pour proposer à un utilisateur d'accéder à un droit sur un contenu audiovisuel moyennant le débit sur son compte en jetons du nombre de jetons indiqué par le critère d'accès.

Si l'utilisateur saisit une réponse d'acceptation, c'est-à-dire si le test 603 est positif, l'équipement récepteur procède parallèlement à la décrémentation du nombre de jetons indiqué par le critère d'accès (étape 605) et au déchiffrement de l'EMM encapsulé, lors d'une étape 604. On notera que le déchiffrement de l'EMM est ainsi subordonné à l'exécution de l'opération de débit du nombre de jetons indiqué dans le critère d'accès CA.

Le message EMM déchiffré est ensuite traité par un équipement de traitement d'EMM, comme précédemment explicité, lors d'une étape 607. Si le traitement de l'EMM est correct (c'est-à-dire si l'équipement traitant l'EMM vérifie qu'il est bien destinataire de l'EMM), on procède à la mise à jour des droits lors d'une étape 606 : des droits Rsc de l'équipement de traitement d'EMM sont modifiés de façon à autoriser l'accès au contenu audiovisuel associé au droit alloué par l'EMM obtenu par traitement de l'ECM. Ce contenu audiovisuel est ici différent du contenu audiovisuel en cours de diffusion.

Selon un mode de réalisation alternatif et non représenté, un premier équipement, par exemple une passerelle résidentielle, reçoit un message ECM de vérification de droits contenant au moins un critère d'accès et des données chiffrées comportant un mot de contrôle et un EMM. Ce premier équipement, récepteur du message ECM, effectue le traitement de ce message ECM et déchiffre ainsi l'EMM encapsulé. Ce premier équipement récepteur transmet ensuite l'EMM à un deuxième équipement de traitement de l'EMM, supposé être le destinataire des droits relatifs à l'EMM.

Dans la description qui précède, le message de vérification de droits contient un critère d'accès et des données, comportant un mot de contrôle CW et un message de mise à jour de droits, chiffrées à l'aide d'une même clé K et d'un même algorithme de chiffrement.

En variante, l'EMM et le mot de contrôle CW pourraient être chiffrés avec des algorithmes de chiffrement respectifs différents et/ou des clés de chiffrement respectives différentes.

On peut également prévoir que, comme dans l'exemple illustré par la figure 6, le message de vérification de droits contienne au moins deux critères d'accès respectivement associés au mot de contrôle et au message de mise à jour de droits. Ainsi, le déchiffrement du mot de contrôle serait subordonné à la vérification du ou des critère(s) d'accès associé(s) au mot de contrôle et le déchiffrement du message de mise à jour serait subordonné à la vérification du ou des critère(s) d'accès associé(s) au message de mise à jour de droits.

On pourrait également envisager que le message de vérification de droits contienne plusieurs messages de mise à jour de droits, destinés à un ou plusieurs équipements destinataires. Les différents messages de mise à jour pourraient en outre être associés à des critères d'accès respectifs différents, contenus dans le message de vérification de droits.

Le contenu audiovisuel peut être destiné à être affiché sur n'importe quel type de terminal, par exemple un ordinateur, un téléphone portable, un PDA (de l'anglais « Personal Digital Assistant »), ou autre.

## Revendications

1. Procédé pour la mise à jour de droits d'un équipement destinataire, comprenant
- une étape de réception (500) d'un message de vérification de droits (ECM) par un équipement récepteur de messages de vérification de droits, ledit message comprenant
▪ au moins un critère d'accès (CA) à un contenu audiovisuel protégé, et
▪ des données chiffrées comportant un moyen d'accès au dit contenu audiovisuel protégé (CW) et au moins un message de mise à jour de droits (EMM) portant sur un contenu autre que ledit contenu audiovisuel protégé,
- une étape (501) de test du critère d'accès, au cours de laquelle l'équipement récepteur vérifie si des droits qui lui sont associés satisfont audit critère d'accès,
- en cas de test positif du critère d'accès, une étape de déchiffrement (502) au cours de laquelle l'équipement récepteur déchiffre le message de mise à jour de droits, et
- une étape de transmission du message de mise à jour de droits déchiffré en vue de la mise à jour des droits de l'équipement destinataire.

2. Procédé selon la revendication 1, comprenant en outre
- une étape de traitement (504) du message de mise à jour de droits transmis, ladite étape étant effectuée par un équipement de traitement de messages de mise à jour de droits pour vérifier que ledit équipement est bien l'équipement destinataire,
- en cas de vérification positive, une étape de mise à jour (503) des droits de l'équipement destinataire à partir du message de mise à jour.

3. Procédé selon la revendication 1, dans lequel, lors de l'étape de déchiffrement (502), l'équipement récepteur déchiffre l'ensemble des données chiffrées à l'aide d'une même clé de déchiffrement.

4. Procédé selon la revendication 1, dans lequel lors de l'étape de transmission, le message de mise à jour de droits déchiffré est transmis à un équipement de traitement de messages de mise à jour, ledit équipement de traitement de messages de mise à jour étant distinct de l'équipement récepteur de messages de vérification de droits.

5. Procédé selon la revendication 1, dans lequel, le critère d'accès étant relatif à une opération de débit, le déchiffrement du message de mise à jour est subordonné à la réalisation de ladite opération de débit.

6. Système (400) pour la mise à jour des droits d'un équipement destinataire, comprenant
- un équipement récepteur de messages de vérification de droits (400), comportant
• des moyens de réception agencés pour recevoir un message de vérification de droits comprenant
▪ au moins un critère d'accès (CA) à un contenu audiovisuel protégé, et
▪ des données chiffrées comportant un moyen d'accès au dit contenu audiovisuel protégé (CW) et au moins un message de mise à jour de droits (EMM) portant sur un contenu autre que ledit contenu audiovisuel protégé,
• un composant de sécurité (403) agencé pour tester si des droits associés à l'équipement récepteur satisfont audit critère d'accès,
• des moyens de déchiffrement (405) pour, en cas de test positif, déchiffrer le message de mise à jour de droits,
• des moyens de transmission du message de mise à jour de droits déchiffré à des moyens de traitement de messages de mise à jour de droits, en vue d'une mise à jour des droits de l'équipement destinataire.

7. Système selon la revendication 6, comprenant en outre un équipement de traitement de messages de mise à jour de droits (400), comprenant
• les moyens de traitement de messages de mise à jour de droits (407), lesdits moyens étant agencés pour vérifier que l'équipement de traitement de messages de mise à jour est bien l'équipement destinataire,
• des moyens de mise à jour (407) agencés pour, en cas de vérification positive, mettre à jour les droits de l'équipement destinataire à partir du message de mise à jour.

8. Système selon la revendication 6, dans lequel les moyens de déchiffrement (405) sont agencés pour déchiffrer l'ensemble des données chiffrées du message de vérification de droits à l'aide d'une même clé de déchiffrement.

9. Message comprenant un message de vérification de droits (ECM) comportant
- au moins un critère d'accès (CA) à un contenu audiovisuel protégé, et
- des données chiffrées comportant un moyen d'accès au dit contenu audiovisuel protégé (CW) et au moins un message de mise à jour de droits (EMM) portant sur un contenu autre que ledit contenu audiovisuel protégé.

10. Procédé de gestion de droits d'un équipement destinataire, comprenant les étapes consistant à:
recevoir un message de mise à jour de droits (EMM),
générer (303) un message de vérification de droits (ECM) comprenant
- au moins un critère d'accès (CA) à un contenu audiovisuel protégé, et
- des données chiffrées comportant un moyen d'accès au dit contenu audiovisuel protégé (CW) et au moins un message de mise à jour de droits (EMM) portant sur un contenu autre que ledit contenu audiovisuel protégé,
diffuser le message de vérification de droits (ECM) généré à un équipement récepteur de messages de vérification de droits.

11. Système (100) de gestion de droits d'un équipement destinataire, comprenant
- des moyens de réception aptes à recevoir un message de mise à jour de droits (EMM),
- des moyens de traitement (102) aptes à générer un message de vérification de droits (ECM) comprenant
au moins un critère d'accès (CA) à un contenu audiovisuel protégé, et
des données chiffrées comportant un moyen d'accès au dit contenu audiovisuel protégé (CW) et au moins un message de mise à jour de droits (EMM) portant sur un contenu autre que ledit contenu audiovisuel protégé,
- des moyens de transmission aptes à diffuser le message de vérification de droits (ECM) généré à un équipement récepteur de messages de vérification de droits.

## Patentansprüche

1. Verfahren zur Aktualisierung von Berechtigungen einer Zieleinrichtung, welches umfasst:
- einen Schritt des Empfangs (500) einer Berechtigungskontrollnachricht (ECM) durch eine Empfangseinrichtung für Berechtigungskontrollnachrichten, wobei die Nachricht umfasst:
▪ wenigstens ein Kriterium des Zugriffs (CA) auf einen geschützten audiovisuellen Inhalt, und
▪ verschlüsselte Daten, die ein Mittel des Zugriffs auf den geschützten audiovisuellen Inhalt (CW) und wenigstens eine Nachricht zur Aktualisierung von Berechtigungen (EMM) in Bezug auf einen anderen Inhalt als den geschützten audiovisuellen Inhalt aufweisen,
- einen Schritt (501) der Prüfung des Zugriffskriteriums, in welchem die Empfangseinrichtung überprüft, ob Berechtigungen, die ihr zugeordnet sind, das Zugriffskriterium erfüllen,
- im Falle einer positiven Prüfung des Zugriffskriteriums einen Schritt der Entschlüsselung (502), in welchem die Empfangseinrichtung die Nachricht zur Aktualisierung von Berechtigungen entschlüsselt, und
- einen Schritt der Übertragung der entschlüsselten Nachricht zur Aktualisierung von Berechtigungen zwecks Aktualisierung der Berechtigungen der Zieleinrichtung.

2. Verfahren nach Anspruch 1, welches außerdem umfasst:
- einen Schritt der Verarbeitung (504) der übertragenen Nachricht zur Aktualisierung von Berechtigungen, wobei dieser Schritt von einer Einrichtung zur Verarbeitung von Nachrichten zur Aktualisierung von Berechtigungen ausgeführt wird, um zu überprüfen, ob diese Einrichtung tatsächlich die Zieleinrichtung ist,
- im Falle einer positiven Überprüfung einen Schritt der Aktualisierung (503) der Berechtigungen der Zieleinrichtung auf der Basis der Nachricht zur Aktualisierung.

3. Verfahren nach Anspruch 1, wobei im Schritt der Entschlüsselung (502) die Empfangseinrichtung die Gesamtheit der verschlüsselten Daten mithilfe ein und desselben Entschlüsselungsschlüssels entschlüsselt.

4. Verfahren nach Anspruch 1, wobei im Schritt der Übertragung die entschlüsselte Nachricht zur Aktualisierung von Berechtigungen zu einer Einrichtung zur Verarbeitung von Nachrichten zur Aktualisierung übertragen wird, wobei diese Einrichtung zur Verarbeitung von Nachrichten zur Aktualisierung von der Empfangseinrichtung für Berechtigungskontrollnachrichten verschieden ist.

5. Verfahren nach Anspruch 1, wobei, wenn das Zugriffskriterium einen Abbuchungsvorgang betrifft, die Entschlüsselung der Nachricht zur Aktualisierung von der Ausführung dieses Abbuchungsvorgangs abhängig ist.

6. System (400) zur Aktualisierung von Berechtigungen einer Zieleinrichtung, welches umfasst:
- eine Empfangseinrichtung für Berechtigungskontrollnachrichten (400), welche aufweist:
• Empfangsmittel, die dafür ausgelegt sind, eine Berechtigungskontrollnachricht zu empfangen, welche umfasst:
▪ wenigstens ein Kriterium des Zugriffs (CA) auf einen geschützten audiovisuellen Inhalt, und
▪ verschlüsselte Daten, die ein Mittel des Zugriffs auf den geschützten audiovisuellen Inhalt (CW) und wenigstens eine Nachricht zur Aktualisierung von Berechtigungen (EMM) in Bezug auf einen anderen Inhalt als den geschützten audiovisuellen Inhalt aufweisen,
• eine Sicherheitskomponente (403), die dafür ausgelegt ist zu prüfen, ob Berechtigungen, die der Empfangseinrichtung zugeordnet sind, das Zugriffskriterium erfüllen,
• Entschlüsselungsmittel (405), um im Falle einer positiven Prüfung die Nachricht zur Aktualisierung von Berechtigungen zu entschlüsseln,
• Mittel zur Übertragung der entschlüsselten Nachricht zur Aktualisierung von Berechtigungen zu Mitteln zur Verarbeitung von Nachrichten zur Aktualisierung von Berechtigungen zwecks Aktualisierung der Berechtigungen der Zieleinrichtung.

7. System nach Anspruch 6, welches außerdem eine Einrichtung zur Verarbeitung von Nachrichten zur Aktualisierung von Berechtigungen (400) umfasst, welche umfasst:
• die Mittel zur Verarbeitung von Nachrichten zur Aktualisierung von Berechtigungen (407), wobei diese Mittel dafür ausgelegt sind zu überprüfen, ob die Einrichtung zur Verarbeitung von Nachrichten zur Aktualisierung tatsächlich die Zieleinrichtung ist,
• Mittel zur Aktualisierung (407), die dafür ausgelegt sind, im Falle einer positiven Überprüfung die Berechtigungen der Zieleinrichtung auf der Basis der Nachricht zur Aktualisierung zu aktualisieren.

8. System nach Anspruch 6, wobei die Entschlüsselungsmittel (405) dafür ausgelegt sind, die Gesamtheit der verschlüsselten Daten der Berechtigungskontrollnachricht mithilfe ein und desselben Entschlüsselungsschlüssels zu entschlüsseln.

9. Nachricht, welche eine Berechtigungskontrollnachricht (ECM) umfasst, welche aufweist:
- wenigstens ein Kriterium des Zugriffs (CA) auf einen geschützten audiovisuellen Inhalt, und
- verschlüsselte Daten, die ein Mittel des Zugriffs auf den geschützten audiovisuellen Inhalt (CW) und wenigstens eine Nachricht zur Aktualisierung von Berechtigungen (EMM) in Bezug auf einen anderen Inhalt als den geschützten audiovisuellen Inhalt aufweisen.

10. Verfahren zum Management von Berechtigungen einer Zieleinrichtung, welches die Schritte umfasst, die in Folgendem bestehen:
Empfangen einer Nachricht zur Aktualisierung von Berechtigungen (EMM),
Erzeugen (303) einer Berechtigungskontrollnachricht (ECM), welche umfasst:
- wenigstens ein Kriterium des Zugriffs (CA) auf einen geschützten audiovisuellen Inhalt, und
- verschlüsselte Daten, die ein Mittel des Zugriffs auf den geschützten audiovisuellen Inhalt (CW) und wenigstens eine Nachricht zur Aktualisierung von Berechtigungen (EMM) in Bezug auf einen anderen Inhalt als den geschützten audiovisuellen Inhalt aufweisen,
Rundsenden der erzeugten Berechtigungskontrollnachricht (ECM) an eine Empfangseinrichtung für Berechtigungskontrollnachrichten.

11. System (100) zum Management von Berechtigungen einer Zieleinrichtung, welches umfasst:
- Empfangsmittel, die geeignet sind, eine Nachricht zur Aktualisierung von Berechtigungen (EMM) zu empfangen,
- Verarbeitungsmittel (102), die geeignet sind, eine Berechtigungskontrollnachricht (ECM) zu erzeugen, welche umfasst:
wenigstens ein Kriterium des Zugriffs (CA) auf einen geschützten audiovisuellen Inhalt, und
verschlüsselte Daten, die ein Mittel des Zugriffs auf den geschützten audiovisuellen Inhalt (CW) und wenigstens eine Nachricht zur Aktualisierung von Berechtigungen (EMM) in Bezug auf einen anderen Inhalt als den geschützten audiovisuellen Inhalt aufweisen,
- Übertragungsmittel, die geeignet sind, die erzeugte Berechtigungskontrollnachricht (ECM) an eine Empfangseinrichtung für Berechtigungskontrollnachrichten rundzusenden.

## Claims

1. Method for updating entitlements of a recipient entity, comprising
- a step (500) of receiving an entitlements verification message (ECM) by an entitlements verification messages receiving entity, said message comprising
• at least one access criterion (CA) for accessing a protected audiovisual content, and
• enciphered data comprising a means for accessing said protected audiovisual content (CW) and at least one entitlements updating message (EMM) pertaining to a content other than said protected audiovisual content,
- a step (501) of testing the access criterion, in the course of which the receiver entity verifies whether entitlements which are associated with it satisfy said access criterion,
- in case of positive test of the access criterion, a decipherment step (502) in the course of which the receiver entity deciphers the entitlements updating message, and
- a step of transmitting the deciphered entitlements updating message with a view to the updating of the entitlements of the recipient entity.

2. Method according to Claim 1, furthermore comprising
- a step (504) of processing the entitlements updating message transmitted, said step being performed by an entitlements updating messages processing entity to verify that said entity is indeed the recipient entity,
- in case of positive verification, a step (503) of updating the entitlements of the recipient entity on the basis of the updating message.

3. Method according to Claim 1, in which, during the decipherment step (502), the receiver entity deciphers the whole of the data enciphered with the aid of one and the same decipherment key.

4. Method according to Claim 1, in which during the transmission step, the deciphered entitlements updating message is transmitted to an updating messages processing entity, said updating messages processing entity being distinct from the entitlements verification messages receiving entity.

5. Method according to Claim 1, in which, the access criterion relating to a bitrate operation, the decipherment of the updating message is subordinated to the carrying out of said bitrate operation.

6. System (400) for the updating of the entitlements of a recipient entity, comprising
- an entitlements verification messages receiving entity (400), comprising
• reception means designed to receive an entitlements verification message comprising
• at least one access criterion (CA) for accessing a protected audiovisual content, and
• enciphered data comprising a means for accessing said protected audiovisual content (CW) and at least one entitlements updating message (EMM) pertaining to a content other than said protected audiovisual content,
• a security component (403) designed to test whether entitlements associated with the receiver entity satisfy said access criterion,
• decipherment means (405) for, in case of positive test, deciphering the entitlements updating message,
• means for transmitting the deciphered entitlements updating message to entitlements updating messages processing means, with a view to an updating of the entitlements of the recipient entity.

7. System according to Claim 6, furthermore comprising an entitlements updating messages processing entity (400), comprising
• the entitlements updating messages processing means (407), said means being designed to verify that the updating messages processing entity is indeed the recipient entity,
• updating means (407) designed to, in case of positive verification, update the entitlements of the recipient entity on the basis of the updating message.

8. System according to Claim 6, in which the decipherment means (405) are designed to decipher the whole of the enciphered data of the entitlements verification message with the aid of one and the same decipherment key.

9. Message comprising an entitlements verification message (ECM) comprising
- at least one access criterion (CA) for accessing a protected audiovisual content, and
- enciphered data comprising a means for accessing said protected audiovisual content (CW) and at least one entitlements updating message (EMM) pertaining to a content other than said protected audiovisual content.

10. Method for managing entitlements of a recipient entity, comprising the steps consisting in:
receiving an entitlements updating message (EMM),
generating (303) an entitlements verification message (ECM) comprising
- at least one access criterion (CA) for accessing a protected audiovisual content, and
- enciphered data comprising a means for accessing said protected audiovisual content (CW) and at least one entitlements updating message (EMM) pertaining to a content other than said protected audiovisual content,
broadcasting the entitlements verification message (ECM) generated to an entitlements verification messages receiving entity.

11. System (100) for managing entitlements of a recipient entity, comprising
- reception means able to receive an entitlements updating message (EMM),
- processing means (102) able to generate an entitlements verification message (ECM) comprising
at least one access criterion (CA) for accessing a protected audiovisual content, and
enciphered data comprising a means for accessing said protected audiovisual content (CW) and at least one entitlements updating message (EMM) pertaining to a content other than said protected audiovisual content,
- transmission means able to broadcast the entitlements verification message (ECM) generated to an entitlements verification messages receiving entity.
